# EUROPÄISCHE PATENTANMELDUNG

(11) **EP 0 727 899 A1**
(43) Veröffentlichungstag der Anmeldung: **21.08.1996**
(21) Anmeldenummer: 95102179.9
(22) Anmeldetag: 16.02.1995
(51) Int. Cl.: H04M 3/24, G06F 11/30

(54) **Prüfsystem eines Rechnersystems**

(71) Anmelder: SIEMENS AKTIENGESELLSCHAFT, 80333 München (DE)
(72) Erfinder: De Clercq, Pascal, B-9130 Drongen (BE)

(57) **Zusammenfassung**

Prüfsysteme sollten gegenüber Änderungen bzw. Erweiterungen der zu überprüfenden Datenbasen weitgehend unabhängig sein. Erfindungsgemäß wird die Entkopplung von Prüflogik/Ausführungscode und Datenbasis durch die Einführung einer Prüfsteuerungstabelle realisiert, die über eine neutrale Datenstruktur, die alle Prüflinge beinhaltet, adressiert wird.

## Beschreibung

Rechnersysteme, z.B. Vermittlungssysteme eines Kommunikationsnetzes, enthalten eigenständige Prüfsysteme, im weiteren auch Prüflogik-Programme oder Audits genannt, die mitlaufend oder bei Bedarf funktionsübergreifende Konsistenzprüfungen von anwendungsbezogenen Daten, z.B. vermittlungstechnischen Daten, durchfuhren. Die genannten Audits sollen Inkonsistenzen erkennen und neutralisieren bzw. korrigieren bevor sie zu einem Systemausfall oder einer Einschränkung von Anwenderfunktionen, z.B. von Vermittlungsfunktionen, führen können. Die genannten Dateninkonsistenzen können z.B. aufgrund von einzelnen Ausfallen oder Verlusten von Nachrichten während Überlastsituationen auftreten.

Im folgenden wird die Problemstellung der Erfindung anhand einer Prüflogik zum Prüfen von vermittlungstechnischen Daten erläutert.

Jeder Typ eines Ports (z.B. Teilnehmer, Trunk, Testequipment, ...) ist softwaretechnisch durch einen eigenen Datentyp (Datenmode) definiert, wobei die Gesamtheit der Datenstrukturen (Instanzen, Variablen) eines Datentyps im folgenden auch als Datenbasis bezeichnet wird. Die zustandsbeschreibenden Daten eines Ports werden jeweils in einer transienten Datenstruktur dieses Datentyps abgespeichert, die im folgenden auch als "Bitleiste" bezeichnet wird, da der Zustand des Ports mit Hilfe der transienten Datenstruktur als eine Kombination von Bits dargestellt wird (In Chill heißt, diese Bitleiste "POWERSET"). Eine Änderung bzw. Erweiterung eines Anschlußtyps (Porttyps) und damit des zugehörigen Datentyps hat deshalb auch immer Einfluß auf die Prüflogik.

Der Erfindung liegt die Aufgabe zugrunde, ein Prüfsystem anzugeben, das gegenüber Änderungen bzw. Erweiterungen der zu überprüfenden Datenbasen weitgehend unabhängig ist.

Diese Aufgabe wird durch die Merkmale des Anspruchs 1 gelöst.

Durch die Erfindung wird eine Entkopplung von Prüfsoftware und Datenbasis von Anwendersystemen des Rechnersystems erreicht. Dadurch kann der eigentliche Ausführungscode der Prüflogik unverändert bleiben, selbst wenn die Prüflogik aufgrund neuer Anforderungen geändert werden muß. Durch diese Entkopplung wird weiterhin die Einführung standardisiert der Prüffunktionen (unverträglich, bedingt verträglich, verträglich und nur in Kombination möglich) ermöglicht.

Eine Ausführungsform der Erfindung ist durch Anspruch 2 angegeben. Diese Ausführungsform hat den Vorteil, daß die Prüfsteuerungstabelle besonders einfach erweiterbar ist, sowie eine erhöhte Transparenz, eine bessere Dokumentation und eine einfachere Verwaltung (z.B. bei Patches) bietet. Außerdem läßt sich dadurch der Standardprüfcode als generischer Prüfcode implementieren.

Im folgenden wird ein Ausführungsbeispiel der Erfindung anhand eines Codebeispiels der erfindungsgemäßen Prüflogik näher erläutert.

Die erfindungsgemäße Entkopplung von Prüflogik/Ausführungscode und Datenbasis eines Anwendersystems (z.B. vermittlungstechnische Datenbasis) wird durch die Einführung einer zweidimensionalen Tabelle realisiert, die über eine neutrale Datenstruktur, die alle Prüflinge beinhaltet, adressiert wird. Die eine Dimension der Tabelle wird also durch in einer treuen Datenstruktur enthaltenen Prüflinge gebildet, wobei die Nummer der in der einen Dimension adressierten Tabelle der Position in der neutralen Datenstruktur entspricht. Die andere Dimension wird durch die Objekte gebildet, gegen die geprüft wird. Diese Objekte können, müssen jedoch nicht identisch mit den Prüflingen sein. Sie sind als character-string definiert, wobei das charakter selbst die auszuführende Prüffunktion bestimmt. (z.B. "i" invalid, "o" one of them, "Ziffer" bedingt verträglich).

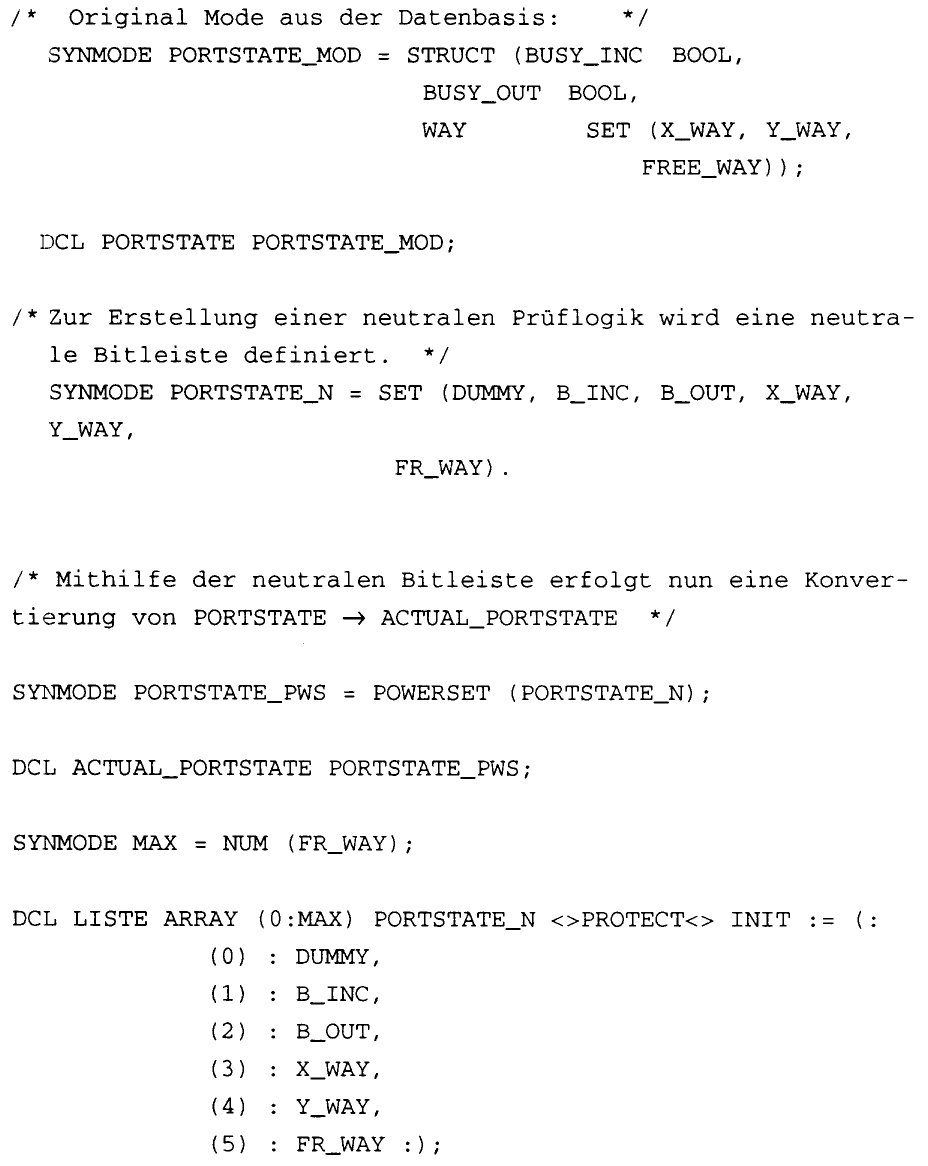

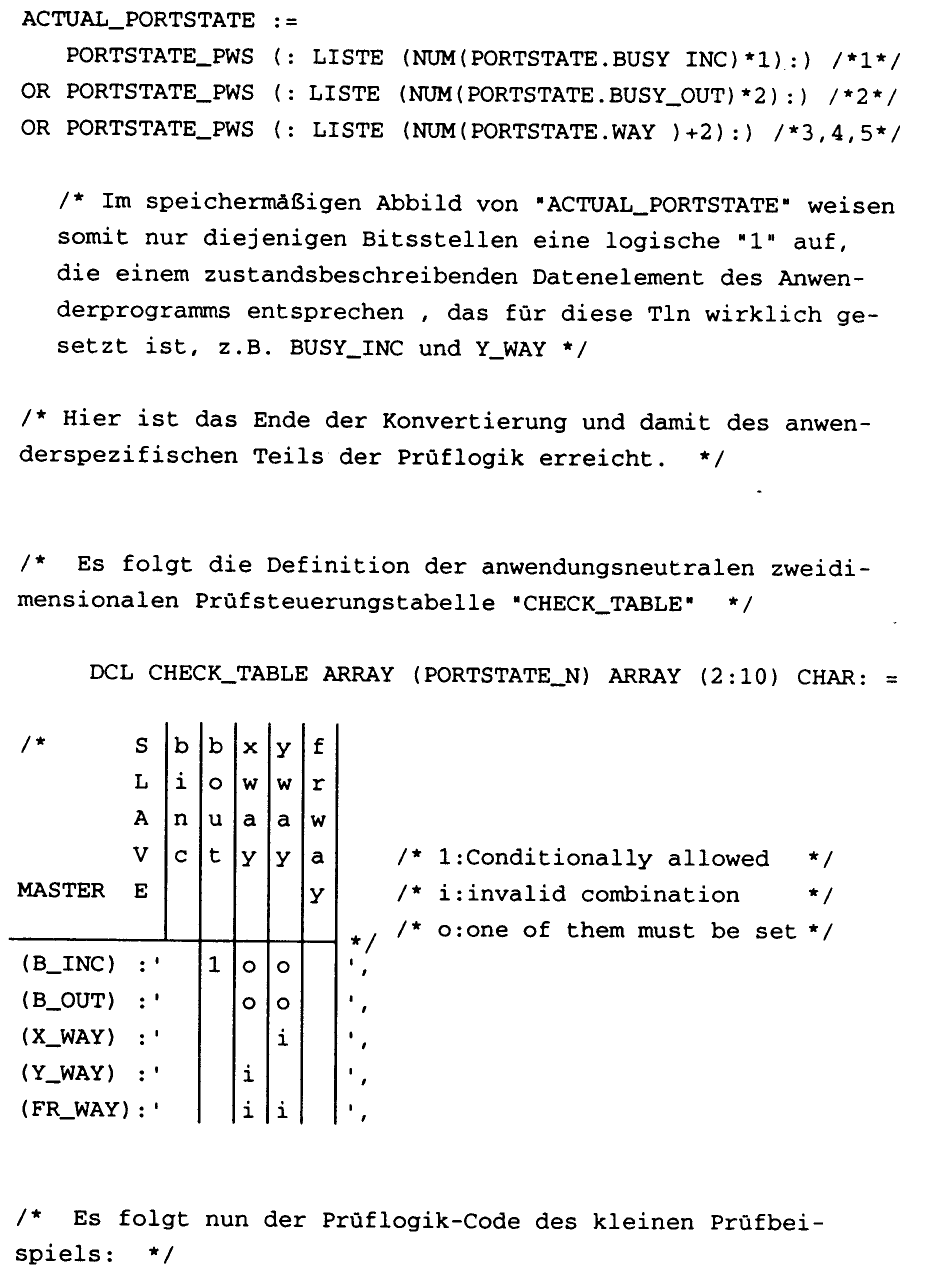

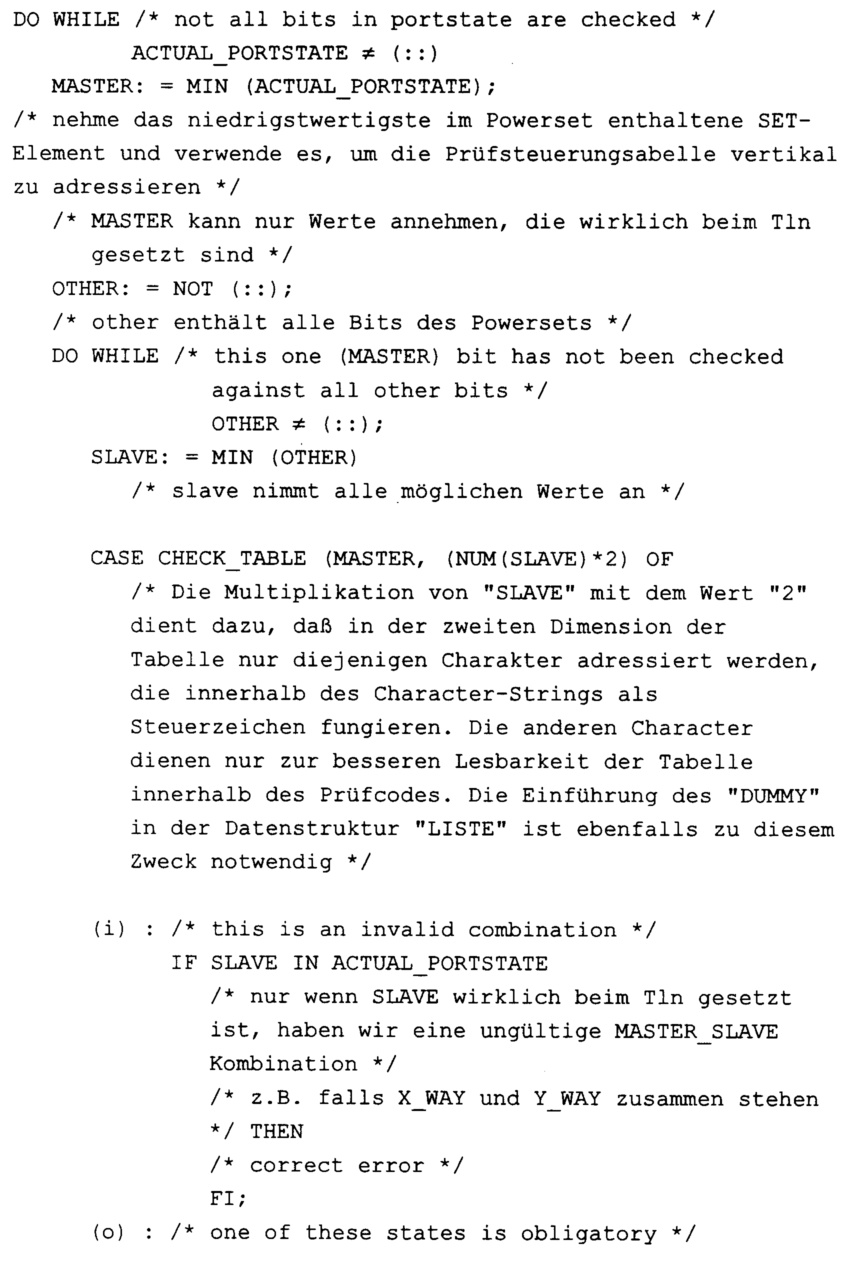

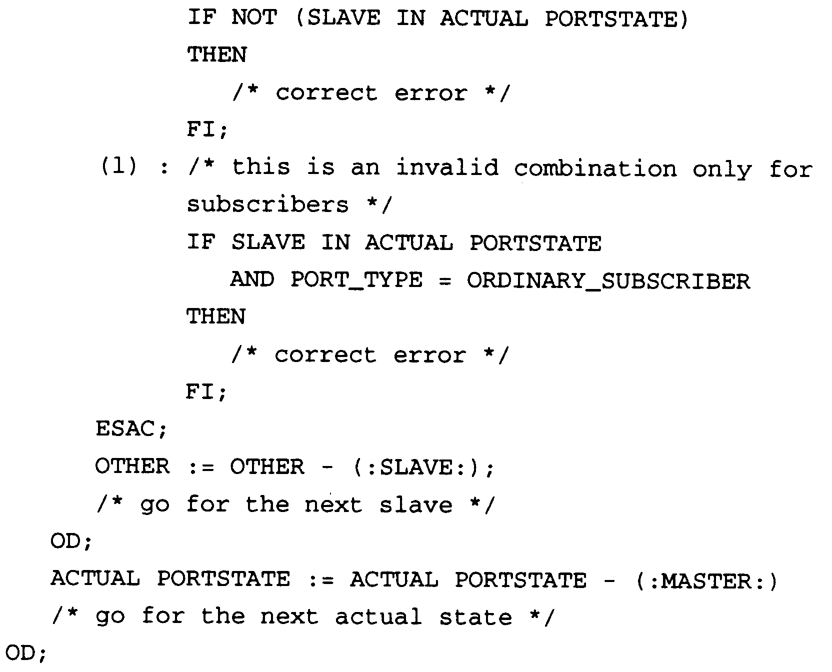

Im folgenden wird das obige Chill-Ausführungsbeispiel näher erläutert. Dazu werden zunächst die wichtigsten, im Ausführungsbeispiel verwendeten Chill-Sprachkonstrukte näher erläutert.

Bei dem Ausdruck "SET" handelt es sich um einen Mode, der nur eine begrenzte Menge von Konstanten annehmen kann, die das Speicherabbild der bei der Mode-Definition angegebenen symbolischen Konstanten darstellen. Im Ausführungsbeispiel wird durch "PORTSTATE_N" ein Set-Mode definiert, der die symbolischen Konstanten DUMMY,B_INC, B_OUT, X_WAY, Y_WAY und FR_WAY enthält. Speichermäßig entspricht der symbolischen Konstante DUMMY der Wert "0", der Konstanten B_INC der Wert "1", der symbolischen Konstante B_OUT der Wert "2", X_WAY der Wert "3", Y_WAY der Wert "4", und FR_WAY der Wert "5".

Der Ausdruck "SYNMODE" oder "SYN" dient in der Sprache CHILL zur Definition eines Daten-Modes, der im Unterschied zu standardmäßigen Daten-Modes wie z.B. ''STRUCT'', ''SET'', oder ''POWERSET'', noch nicht standardmäßig in Chill enthalten ist. Nach dem Ausdruck "SYNMODE" folgt der Name des zu definierenden Daten-Modes, wie beispielsweise im Ausführungsbeispiel die Namen ''PORTSTATE'' oder ''PORTSTATE_N".

Mit Hilfe des Sprachkonstrukts ''POWERSET'' wird ein Daten-Mode definiert, dem als Basis-Mode ein weiterer Datenmode, z.B. der SET-Datenmode, zugrundeliegt. Mit ''POWERSET'' können alle Untermengen des zugrundeliegenden Basismodes wiedergegeben werden. Eine Variable des Daten-Modes ''POWERSET'' wird auf physikalischer Ebene durch einen Bit-String repräsentiert, dessen Länge der Anzahl der Elemente des Basis-Modes (z.B. des SET-Modes) entspricht.

Als Beispiel eines mit dem Sprachkonstrukt "POWERSET" definierten Daten-Modes wird der Daten-Mode ''PORTSTATE_PWS'' des Ausführungsbeispiels näher betrachtet. Diesem Daten-Mode liegt als Basis-Mode der Datenmode ''PORTSTATE_N'' zugrunde, der die symbolischen Konstanten "DUMMY", ''B_INC'', ''B-OUT'', "X_WAY", ''Y_WAY'' und ''FR_WAY'' umfaßt. Jeder dieser symbolischen Konstanten wird auf Speicherebene eine Bitposition innerhalb des Bit-Strings, auf den der POWERSET-Mode speichermäßig abgebildet wird, zugeordnet. In dem Beispiel umfaßt der Bit-String des POWERSETS ''PORTSTATE_PWS'' also fünf Bit-Positionen. Die zugehörige Wertemenge umfaßt also 2⁵=32 verschiedene Werte.

Es sei beispielsweise angenommen, daß die Variable ''PORTSTAE'' des Daten-Modes ''PORTSTATE_MOD'' nur für das Datenelement ''BUSY_INC'' und ''X_WAY'' eine logische ''1'' aufweist. In diesem Fall wird die Variable ''ACTUAL_PORTSTATE'' auf Speicherebene durch den Bit-String (0, 0, 1, 0, 1) wiedergegeben, d.h. ''ACTUAL-PORTSTATE enthält die Untermenge {B_INC, X_WAY}. Mit Daten-Modes vom Typ ''POWERSET'' können nun verschiedene SET-Operationen durchgeführt werden, z.B. die Operationen ''AND'', ''OR'', ''IN'', ''NOT'', ''-'', wie sie bei Mengen üblich sind. Des weiteren können verschiedene Standardfunktionen auf diese Daten-Modes angewendet werden, z.B. die Funktion ''MIN (. .)''. Die MIN-Funktion ermittelt den Basis-Mode-Wert des niedrigstwertigsten Elements des zugrundeliegenden Basis-Modes, das durch die niedrigste Bitposition im Bit-String repräsentiert wird. Im vorher genannten Beispiel wäre das Element der niedrigsten Bitposition die Konstante "B_INC", deren Wert dem Wert ''1'' entspricht. Während der Wert für das Element ''X_WAY'' dem Wert ''3'' entspricht.

Im folgenden wird anhand der bisherigen Erläuterungen das Codierungsbeispiel erläutert. Zur Aufnahme der aktuellen PORTSTATUS-Daten in die Prüflogik wird zunächst eine neutrale Bitleiste definiert, nämlich der SET-Mode ''PORTSTATE_N''. Ausgehend von diesem Daten-Mode als Basis-Mode wird der POWERSET-Mode ''PORTSTATE_PWS'' definiert, von dem eine Instanz bzw. Variable, nämlich die Variable ''ACTUAL_PORTSTATE'', deklariert wird. Die Variable ''ACTUAL_PORTSTATE'' dient zur Aufnahme der in ''PORTSTATE'' enthaltenen Daten eines Teilnehmers.

Der Prüflogik-Code arbeitet daraufhin wie folgt:

In einer großen ''DO_WHILE"-Schleife wird, solange die POWERSET-Variable ''ACTUAL_PORTSTATE'' ungleich der leeren Menge ist, die Prüfsteuerungstabelle vertikal adressiert. Wenn wir wieder vom vorher genannten Beispiel der PORTSTATUS-Daten ausgehen, bei dem die Elemente ''B_INC'' und ''X_WAY'' gesetzt waren, d.h. eine logische ''1'' aufwiesen, so liefert die Funktion ''MASTER'' zunächst den SET-Wert ''B_INC '' (entspricht speichermäßig dem Wert ''1'').

Während mit der Variable ''MASTER'' die eine Dimension der zweidimensionalen Prüfsteuerungstabelle adressiert wird, wird die Variable ''SLAVE'' für die Adressierung der zweiten Dimension verwendet.

In einer "CASE"-Anweisung wird das solchermaßen adressierte Feld in der Prüfsteuerungstabelle "CHECK_TABLE" gelesen und abhängig vom Inhalt entsprechende Aktionen veranlaßt.

Zu der genannten Prüfsteuerungstabelle ist zu bemerken, daß die eine Dimension die Bitleiste selbst ist und die andere Dimension ein Array von Character, d.h. ein Character-String, wobei jede gerade Position im Character-String dem absoluten Wert eines Bits der Bitleiste entspricht. Die Querpunkte der zwei Arrays enthalten Steuerzeichen, die über die bereits erwähnte "CASE"-Anweisung eine porttypunabhängige Prüflogik anstoßen. Sonderprüfungen werden durch entsprechende Sonderzeichen in der Tabelle dargestellt.

Im Codebeispiel wird der erste Querpunkt der Prüfsteuerungstabelle bei der Kombination (B_INC) und Position 4 des ersten Character-String (d.h. "1") erreicht. Die CASE-Anweisung zeigt für "(1)", daß eine porttypabhängige Prüfung durchgeführt werden soll.

Im Codebeispiel ist das Bit B_OUT in der Datenstruktur ACTUAL_PORTSTATE nicht gesetzt, d.h. hier liegt keine Inkonsistenz vor. Also kann zum nächsten Querpunkt verzweigt werden (B_INC, X_WAY).

Die neutrale Datenstruktur könnte selbstverständlich die Datenwerte von Datenelementen mehrerer anwenderspezifischer Datentypen, d.h. nicht nur allein die Datenwerte des Datentyps "Anschluß", aufnehmen.

Allerdings ist es vorteilhaft für jeden zu prüfenden Objekttyp, z.B. den Anschlußtyp "Teilnehmer", eine eigene neutrale Datenstruktur vorzusehen, und zwar deshalb, weil eine allgemeine Datenstruktur zu einer riesigen Tabelle führen würde. Nur für eine geringe Anzahl von Anschlußtypen hat eine große Menge von Zuständen Relevanz. Aufgrund der dadurch bedingten Redundanz würde dies zu einem beträchtlichen Speicherplatzverlust führen.

Eine weitere Anwendung der Erfindung innerhalb eines Vermittlungssystems ist die Inkonsistenzprüfung bei leistungsmerkmalbezogenen Daten. Die Erfindung kann hier einerseits die Eingabe von unzulässigen Kombinationen von Leistungsmerkmalen verhindern und andererseits irrtümlich vorkommende Kombinationen von Leistungsmerkmalen detektieren und bereinigen.

Durch die erfindungsgemäße Prüflogik werden folgende Vorteile erzielt:

Die Prüflogik ist einfach verwaltbar, da Änderungen der Prüflogik (Kombinationen von Zuständen) durch das Setzen/Rücksetzen eines Characters erreicht wird. Dies erlaubt eine einfache Korrektur über einen Patch.

Der Code der Prüflogik kann über Versionen hinaus fast unverändert bleiben. Die einzige Ausnahme hiervon bilden lediglich die Prüftabellen, die gegebenenfalls mit Steuerzeichen (z.B. "i") ergänzt werden müssen.

Die Prüflogik ist generisch (d.h. der Standardprüfcode ist als ein Template (Schablone) vorhanden und kann mit geringen Änderungen für jeden Porttyp eingesetzt werden), weshalb sie mit geringen Anpassungen für beliebige Porttypen eingesetzt werden kann. Des weiteren ist die Prüflogik unabhängig vom Datenlayout der Datenbasis des Anschlußtyps.

Da die Prüfsteuerungstabellen 1 : 1 in die Dokumentations-Spezifikation kopiert werden können, entspricht die Dokumentation immer der programmiertechnischen Realisierung.

Bei Fehlern ist die Prüflogik einfach patchbar, da jeweils nur ein Character in der Tabelle geändert werden muß.

Durch einen Vergleich mit einem Leerstring ist die Interpretation der einzelnen Textstrings dynamisch optimiert. Wenn nämlich im Textstring nur am Anfang Steuerbits definiert sind (und die restlichen Characters sind "| | |..."), dann wird dieses durch den Vergleich mit dem "Leer-String" (="| | |...") entdeckt und die Prüfung dieses Text-Strings wird abgebrochen.

## Patentansprüche

1. Prüfsystem eines Rechnersystems, das Konsistenzprüfungen von anwenderprogrammbezogenen Daten durchführt und gegebenenfalls neutralisierende oder korrigierende Aktionen veranlaßt oder durchführt, mit
a) einer Prüfsteuerungstabelle, die mit Hilfe von in ihr enthaltenen Steuerungszeichen jeder möglichen Datenkombination eine entsprechende Aktion zuordnet, bei Vorliegen von bestimmten Datenkombinationen veranlaßt werden sollen,
b) einem Prüfcode, der die tatsächlichen Datenwerte aus wenigstens einer Datenstruktur eines Anwenderprogramms liest, anhand der Datenwerte die tatsächlich auftretenden Datenkombinationen ermittelt und mit Hilfe der genannten Prüfsteuerungstabelle die jeweils auszufuhrenden Aktionen bestimmt,
**dadurch gekennzeichnet, daß**
c) der Prüfcode einen Konvertierungscode umfaßt, der die tatsächlichen Datenwerte aus der wenigstens einen Datenstruktur in eine neutrale Datenstruktur des Prüfsystems überträgt,
d) der Prüfcode einen Standardprüfcode umfaßt, der die tatsächlichen Datenwerte aus der neutralen Datenstruktur entnimmt, anhand der Datenwerte die tatsächlich auftretenden Datenkombinationen ermittelt und mit Hilfe der genannten Prüfsteuerungstabelle die jeweils auszuführenden Aktionen bestimmt.

2. Prüfsystem eines Rechnersystems nach Anspruch 1,
**dadurch gekennzeichnet,**
daß der Standardprüfcode die Prüfsteuerungstabelle über die genannte neutrale Datenstruktur adressiert, wobei hierzu jedes Datenelement innerhalb der neutralen Datenstruktur einer bestimmten Adresse der ersten Dimension der Prüfsteuerungstabelle zugeordnet ist.
